# EUROPÄISCHE PATENTANMELDUNG

(11) **EP 2 743 594 A1**
(43) Veröffentlichungstag der Anmeldung: **18.06.2014**
(21) Anmeldenummer: 13173590.4
(22) Anmeldetag: 25.06.2013
(51) Int. Cl.: F24D 3/14

(54) **Flächentemperierungssystem sowie Klettfolie für ein Flächentemperierungssystem**

(30) Priorität: 04.07.2012 DE 202012102478 U
(71) Anmelder: Uponor Innovation AB, 73061 Virsbo (SE)
(72) Erfinder: Dellwig, Stefan, 22419 Hamburg (DE); Lipinski, Johann, 22926 Ahrensburg (DE)
(74) Vertreter: Epping - Hermann - Fischer

(57) **Zusammenfassung**

Flächentemperierungssystem umfassend eine Klettfolie (2) zum Ausrollen auf bereits verlegter Dämmung (1), Mittel zum Fixieren oder Spannen (6, 8, 9, 10) der Klettfolie (2) und Rohren (13) mit Klettmaterial (14) zum Verlegen auf der Klettfolie (2).

## Beschreibung

Die Erfindung betrifft ein Flächentemperierungssystem sowie eine Klettfolie für ein Flächentemperierungssystem.

Zum Heizen und Kühlen von Räumen ist es bekannt, Rohrsysteme in Fußböden, Wänden oder Decken zu verlegen. Die entsprechenden Rohrsysteme werden von Wasser oder Wasserdampf durchströmt und heizen oder kühlen so einen umgebenden Raum. Bevor Rohrleitungen zum Beispiel auf Fußböden in eine Estrichschicht eingegossen werden, werden die Rohrleitungen auf ein geeignetes Trägersystem montiert.

Es ist bekannt, als Trägersystem eine so genannte Noppenplatte zu verwenden, wobei die flexiblen Rohrleitungen zwischen die Noppen in der gewünschten Weise eingedrückt werden.

Eine alternative Methode sieht vor, Holzfaserplatten oder Kunststoffplatten zu verwenden, die mit einer aufkaschierten Klettfolie versehen sind. Die zu verlegenden Rohre sind ebenfalls mit einem Klettmaterial versehen, sodass der Installateur die zu verlegenden Rohrleitungen nach Belieben im Raum auf der Klettfolie der Holzfaser- beziehungsweise Kunststoffplatten verlegen kann.

Die Holzfaser- oder Kunststoffplatten müssen durch unterschiedlichste Verbinder umständlich miteinander verbunden werden. Bei den Holzfaserplatten erschwert zusätzlich ein hohes Eigengewicht die Arbeit, insbesondere beim Verlegen und beim Transport.

Weiterhin gibt es auch Systeme mit so genannten Strahltragmatten, an welchen die zu verlegenden Rohrleitungen fixiert werden, jedoch weisen diese Systeme einen sehr hohen Montageaufwand auf.

Der Erfindung liegt daher die Aufgabe zugrunde, ein verbessertes Flächentemperierungssystem aufzuzeigen, welches einfacher zu handhaben und zu montieren ist.

Erfindungsgemäß wird die Aufgabe gelöst durch ein Flächentemperierungssystem umfassend eine Klettfolie zum Ausrollen auf bereits verlegter Dämmung, Mittel zum Fixieren oder Spannen der Klettfolie und Rohren mit Klettmaterial zum Verlegen auf der Klettfolie.

Die Klettfolie als Bestandteil des Flächentemperierungssystems erhöht ernorm die Verlegegeschwindigkeit des Systems und ist darüber hinaus unabhängig von der bereits verlegten Dämmung.

In den bisher bekannten Systemen ist die Klettfolie auf Systemträger wie Holzfaser- oder Kunststoffplatten aufkaschiert, wodurch im Vergleich zum erfindungsgemäßen System der Transport und die Montage extrem erschwert werden. Die erfindungsgemäße Klettfolie muss lediglich im Raum auf der bereits verlegten Dämmung ausgerollt werden.

Die einzelnen Bahnen der Klettfolie werden überlappend verlegt und anschließend vorzugsweise mit einem Klebeband verklebt. An den Stirnseiten kann die Klettfolie mit handelsüblichen Werkzeugen, dem Folienmesser oder einer Schere entsprechend zugeschnitten werden.

Des Weiteren weist das erfindungsgemäße System Mittel zum Fixieren oder Spannen der Klettfolie auf.

Die Mittel zum Fixieren oder Spannen der Klettfolie bewirken, dass sich diese nicht beim Verlegen der Rohre auf der Klettfolie verschiebt.

Ein Fixieren oder Spannen der Klettfolie ist daher von Bedeutung, da die Klettfolie keinen Systemträger, das heißt nicht auf einer Holzfaserplatte oder Kunststoffplatte, aufkaschiert ist und die Rückstellkräfte der zu verlegenden flexiblen Rohre die Klettfolie zusammenschieben beziehungsweise ziehen würden und somit die Klettfolie nicht mehr glattflächig verbleiben würde.

Insbesondere ist daher ein Fixieren oder Spannen der Klettfolie an den Ecken erforderlich. Das Fixieren oder Spannen kann durch Festlegen der Klettfolie mittels Klebeband auf der Dämmung oder an den raumumschließenden Bauteilen erfolgen.

Die Mittel zum Fixieren oder Spannen der Klettfolie können günstigerweise durch Tackern, Kletten oder Kleben der Klettfolie an den raumumschließenden Bauteilen realisiert sein.

Die für die Rohrverlegung erforderliche Stabilität der Klettfolie wird insbesondere durch das Spannen der Folie zwischen den Raumumschließungsflächen gewährleistet. Das Spannen der Klettfolie erfolgt durch eine kraftschlüssige Verbindung der Folie mit den Raumumschließungsflächen und gewährleistet die ebene Verlegbarkeit der flexiblen Rohre in der Fläche.

Die Mittel zum Fixieren oder Spannen der Klettfolie können gemäß einer alternativen Ausführungsform Winkel umfassen, welche mit einem Schenkel mit der Klettfolie und mit dem anderen Schenkel mit den raumumschließenden Bauteilen verbindbar sind.

Die Winkel können zum Beispiel aus Pappe oder Kunststoff gebildet sein. Gemäß einer weiteren Ausführungsform sind auch die Winkel als Wickelmaterial mit einem Folienscharnier in der Knickstelle ausgebildet.

Vorzugsweise ist der Winkel mit der Klettfolie mittels einer Klettverbindung verbindbar und mit den raumumschließenden Bauteilen durch Kleben, Tackern oder ebenfalls durch eine Klettverbindung verbindbar.

Gemäß einer bevorzugten Ausführungsform besteht die Klettfolie aus Polypropylen. Dadurch ist die Klettfolie kostengünstig herstellbar und die verlegten Folienbahnen lassen sich leicht durch ein Klebeband miteinander verbinden.

Günstigerweise ist die Klettfolie sehr dünn, das heißt mit einer Dicke von zirka 250 µm ausgebildet. Durch die sehr dünne Ausbildung der Klettfolie wird die Handhabung insbesondere der Transport und das Verlegen im Vergleich zu den bisher bekannten Systemen sehr erleichtert, da wesentlich weniger Material transportiert und bewegt werden muss.

Die Klettfolie hat den weiteren Vorteil, dass sie gleichzeitig auch die Aufgabe der Feuchtigkeitssperre zwischen Estrich und Dämmung übernimmt.

Bei der Verlegung von Flüssigestrich ist es günstig, eine komplette raumumschließende Verbindung mit den raumumschließenden Bauteilen zu realisieren. Bei der Verwendung von Zementestrich ist es ausreichend, wenn die Mittel zum Fixieren oder Spannen der Klettfolie nur soweit verwendet werden, dass eine ebene Verlegbarkeit der Heizungsrohre in der Fläche gewährleistet ist und nicht durch die Rückstellkräfte der flexiblen Heizungsrohre eine Bewegung der Folie erfolgen kann. Hierzu ist es insbesondere notwendig, die Mittel zum Fixieren oder Spannen der Klettfolie an den Ecken vorzusehen.

Die raumumschließenden Bauteile sind vorzugsweise durch Randdämmstreifen aus geschlossenzelligem Polyethylenschaum mit einer Dicke von 8 mm bis 10 mm und gebildet.

Diese Randdämmstreifen haben den Vorteil, dass die Klettfolie entweder unmittelbar oder über einen Winkel einfach und zuverlässig durch Tackern, Kletten oder Kleben an diesen befestigt werden kann. Erfolgt die Befestigung durch Kletten, wird auf den Randdämmstreifen ein Klettband mit klebender Rückseite aufgebracht.

Die Erfindung wird ebenso gelöst durch eine Klettfolie zur Verwendung in dem oben beschriebenen Flächentemperierungssystem.

Nachfolgend wird die Erfindung anhand eines in den Figuren dargestellten Ausführungsbeispieles näher erläutert.

In den Zeichnungen zeigen:
- Figur 1: eine Klettfolie zum Ausrollen auf bereits verlegter Dämmung,
- Figur 2: eine schematische Ansicht der ausgerollten und zugeschnittenen Klettfolie,
- Figur 3: die Ansicht gemäß Figur 2 nach dem Verspannen der Klettfolie an den raumumschließenden Bauteilen mittels Winkeln,
- Figur 4A: die Ansicht gemäß Figur 3 nach dem Verspannen der Klettfolie mittels Tackern,
- Figur 4B: eine zum Tackern verwendete Klammer,
- Figur 5: eine schematische Schnittansicht der verlegten Klettfolie mit Befestigung mittels doppelseitigem Klebeband,
- Figur 6A: die Ansicht gemäß Figur 5 mit Befestigung der Klettfolie mittels Klettklebewinkel und
- Figur 6B: ein Teil des Klebewinkels gemäß Figur 6A als Wickelmaterial und
- Figur 7: das Flächentemperierungssystem mit verlegten flexiblen Rohren.

In den Figuren werden Elemente mit gleicher Funktion und Konstruktion mit dem gleichen Bezugszeichen versehen und nicht gesondert erläutert.

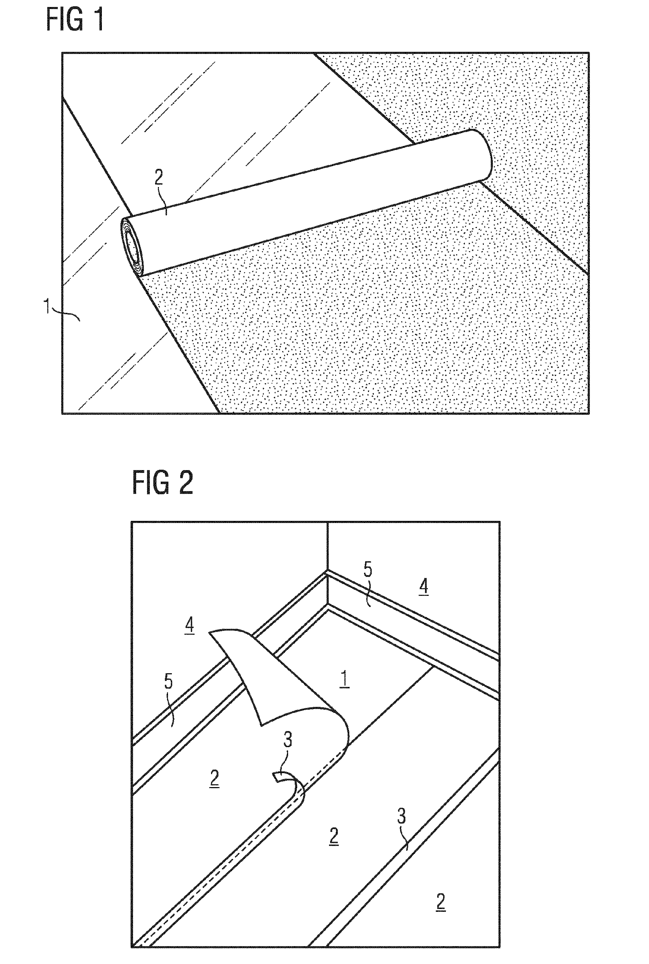

Figur 1 zeigt einen Ausschnitt eines Fußbodens mit bereits verlegter Dämmung 1, auf welchem eine Klettfolie 2 in Bahnen ausgerollt und verlegt wird.

Die Klettfolie 2 besteht aus Polypropylen, ist zirka 250 µm dick und weist auf einer Seite Klettmaterial auf, sodass daran flexible Rohre, welche ebenfalls mit Klettmaterial versehen sind, festgelegt werden können.

Bevorzugt ist die Klettfolie auf einer Seite mit Klettvelours versehen und die Rohre sind spiralförmig mit einem Klettband, welches Kletthaken oder ähnliches aufweist, umwickelt, sodass sich die Rohre leicht und flächig auf dem Klettvelours der Klettfolie verlegen und ankletten lassen.

Die Klettfolie ist nicht auf einen Systemträger aufkaschiert, sondern wird als Wickelmaterial angeliefert und kann daher extrem leicht auf der Baustelle in Bahnen auf einer bereits verlegten Dämmung verlegt werden. Die Folie wird dabei wie ein Teppich ausgerollt und kann in einfachster Weise mit handelsüblichen Werkzeugen der Raumgeometrie angepasst werden.

Figur 2 zeigt einen Ausschnitt aus einem Raum, in welchem drei Bahnen der Klettfolie 2 bereits verlegt sind. Die Bahnen der Klettfolie 2 werden überlappend verlegt und an den Übergängen von zwei Folienbahnen an der Oberseite mit einem Klebeband 3 über die komplette Länge der Bahnen verklebt. Hierdurch übernimmt die Klettfolie auch gleichzeitig die Aufgabe, der Feuchtigkeitssperre zwischen dem noch aufzubringenden Estrich und der darunterliegenden Dämmung 1. Bei dem in Figur 2 dargestellten Raum sind an der Unterseite der umgebenden Wände 4 Randdämmstreifen 5 verlegt. Die Randdämmstreifen sind aus geschlossenzelligem PE-Schaum gebildet und weisen eine Dicke von 8 bis 10 mm auf. Die Folie 2 ist der Raumgeometrie so angepasst, dass sie bündig vor dem Randdämmstreifen 5 endet.

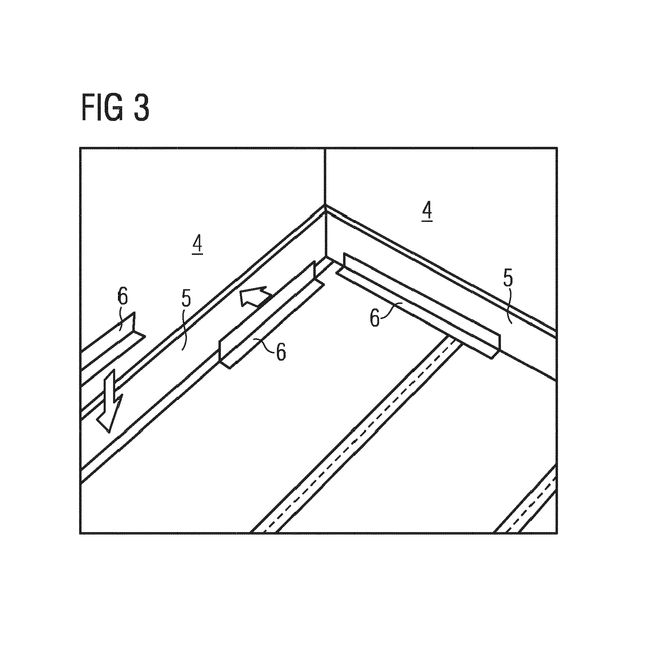

Figur 3 zeigt die Darstellung gemäß Figur 2, wobei in Figur 3 Mittel zum Fixieren oder Spannen der Klettfolie an den raumumschließenden Bauteilen dargestellt sind. Gemäß der Ausführungsform in Figur 3 sind die Mittel zum Fixieren oder Spannen der Klettfolie als Winkel 6 ausgeführt. Bei der Montage werden die Winkel mit ihrem ersten Schenkel auf dem Rand der Klettfolie 2 festgelegt und danach mit dem zweiten Schenkel an den raumumschließenden Bauteilen, in Figur 3 an den Randdämmstreifen 5. Die Festlegung an der Folie kann durch eine Klettverbindung, durch Kleben oder Tackern und die Verbindung an den Randdämmstreifen 5 beziehungsweise den raumumschließenden Bauteilen ebenso durch eine Klettverbindung, Kleben oder Tackern erfolgen.

Durch das Festlegen der Klettfolie an den raumumschließenden Bauteilen ist gewährleistet, dass nach dem Verlegen von flexiblen Rohren, welche mit einem Klettband versehen sind, auf der Klettfolie 2 diese durch die Rückstellkräfte der flexiblen Rohre nicht von den Seiten weggezogen wird, sondern flächig verlegt bleibt.

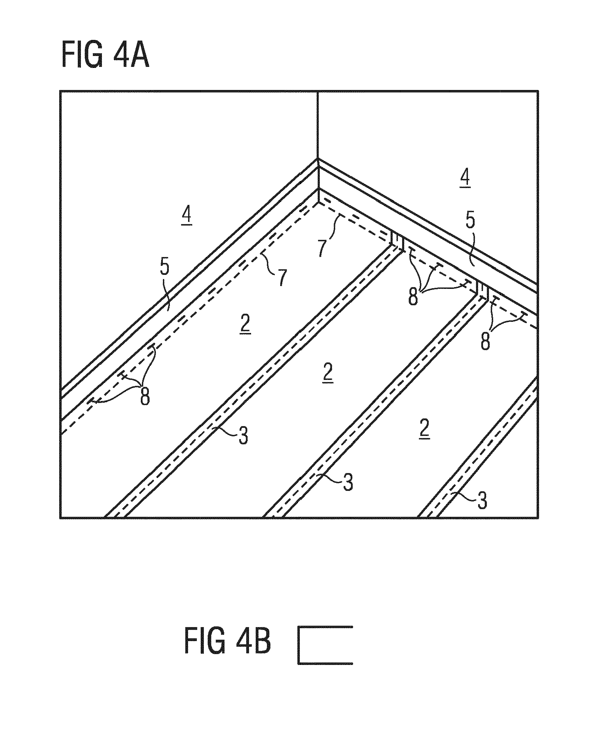

Figur 4A zeigt eine weitere Ausführungsform, wobei in diesem Fall die Klettfolie 2 so verlegt ist, dass sie sowohl seitlich als auch stirnseitig im Eck zwischen der Wand 4 und dem Boden entlang einer Klicklinie 7 um zirka 90° geknickt wurde und danach durch Tackern an den Randdämmelementen 5 festgelegt wurde. Für das Tackern werden U-förmige Klammern 8 verwendet, wie eine in Figur 4B dargestellt ist. Da die Klettfolie 2 aus Polyethylen gebildet ist und die Randdämmstreifen 5 aus PE-Schaum, werden die Klammern 8 elastisch umschlossen. Eine Flüssigkeitsbarriere für den einzubringenden Estrich bleibt auch bei der Verwendung der Klammern 8 beim Tackern der Klettfolie 2 an die Randdämmstreifen 5 erhalten.

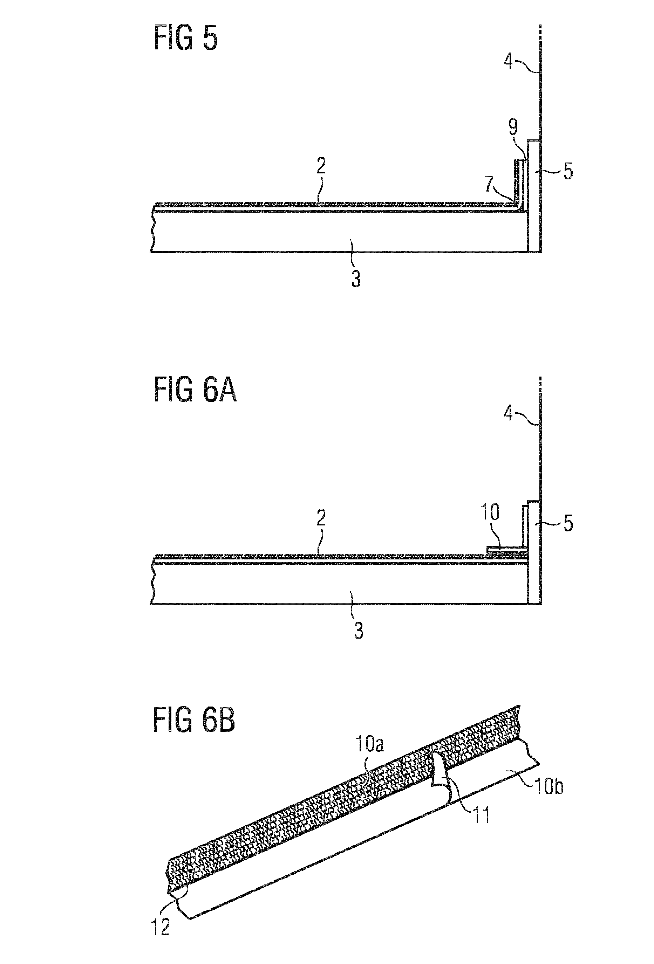

Figur 5 zeigt eine weitere Ausführungsform in einer schematischen seitlichen Ansicht. Gemäß diesem Ausführungsbeispiel ist die Klettfolie 2 wiederum so verlegt, dass sie an der Stoßstelle zur Wand 4 beziehungsweise dem Randdämmstreifen 5 entlang einer Klicklinie 7 um 90° abgeknickt ist und über ein Doppelklebeband 9 mit dem Randdämmstreifen 5 verbunden ist. Das Doppelklebeband 9 wird hier zu vorzugsweise vorher auf den Randdämmstreifen 5 aufgebracht und die Klettfolie 2 nach dem Ausrollen und Anbringen an dieses angedrückt.

Figur 6A zeigt eine weitere Ausführungsform, in einer schematischen Seitenansicht, wobei hier die Klettfolie 2 bis zum Randdämmstreifen 5 verlegt ist und über einen Klettklebewinkel 10 am Randdämmstreifen 5 befestigt ist.

Figur 6B zeigt ein Teil des Klettklebewinkels 10 als Bandmaterial. Der Klettklebewinkel 10 weist einen Klettbereich 10a zur Festlegung auf der Klettfolie 2 und einen Klebebereich 10b, von welchem eine Folie 11 abgezogen werden kann, zur Festlegung an den raumumschließenden Bauteilen auf. Der Klettbereich 10a und der Klebebereich 10b sind über ein Folienscharnier 12 verbunden, sodass der Klettklebewinkel 10 als Bandmaterial auf einer Rolle wie ein Klebeband angeliefert werden kann und über ein Spezialwerkzeug leicht verlegt werden kann.

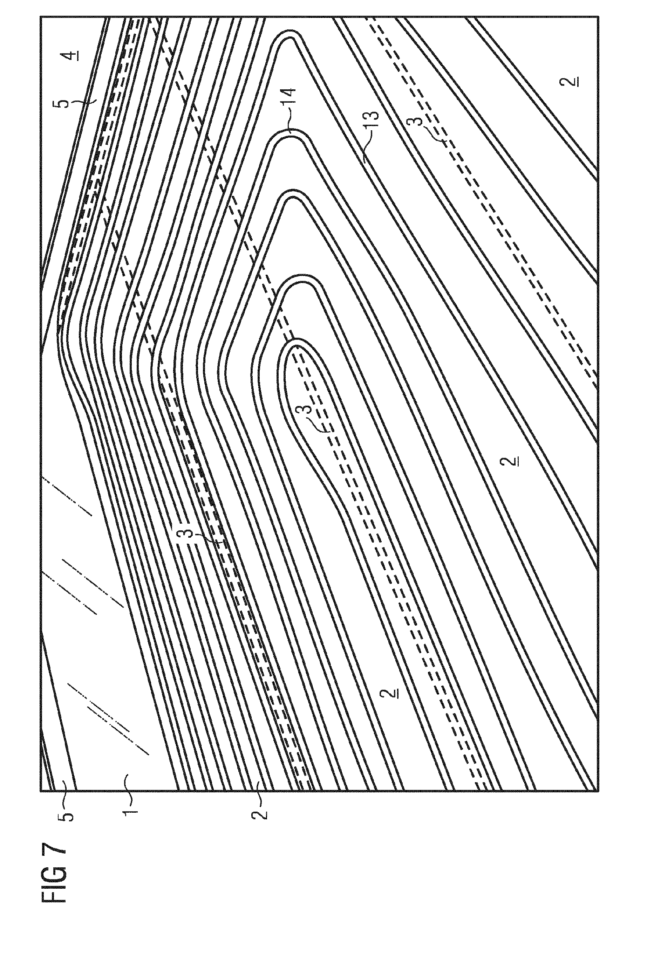

Figur 7 zeigt einen Ausschnitt aus einem Raum mit einem verlegten Flächentemperierungssystem vor dem Aufbringen des Estrichs. Der Raum ist mit Randdämmelementen 5 und einer bereits verlegten Dämmung 1 versehen. Auf die Dämmung 1 ist die Klettfolie 2 in Bahnen aufgebracht und die Bahnen sind über Klebeband 3 miteinander verbunden. Die Klettfolie 2 ist längs der Folienbahnen nicht an den raumumschließenden Bauteilen festgelegt, jedoch stirnseitig der Folienbahnen fixiert beziehungsweise gespannt.

Die Art der Fixierung beziehungsweise des Spannens der Klettfolie 2 ist nicht näher dargestellt und kann wie in den Figuren 2 bis 6B dargestellt verwirklicht sein. Ebenso ist es auch möglich, dass das Fixieren oder Spannen der Klettfolie 2 durch Verkleben der Ränder der Klettfolie 2 mittels Klebeband 3 auf der Dämmung 1 erfolgt ist.

Auf der Klettfolie 2 ist bereits ein flexibles Rohr 13 aus Kunststoff verlegt, wobei das Rohr 13 mit einem Klettband 14 spiralförmig umwickelt ist, welches in der Regel Kletthaken aufweist und so ausgebildet ist, dass es auf der Klettfolie 2 durch Andrücken leicht befestigt werden kann.

Durch das erfindungsgemäße Flächentemperierungssystem ist gegenüber den bereits bekannten Systemen ein wesentlicher Fortschritt erzielt, da die Klettfolie wesentlich leichter transportiert und verlegt werden kann wie die bisherigen Holzfaser- beziehungsweise Kunststoffplatten mit aufkaschierter Klettfolie. Des Weiteren ist das System auch in der Summe wesentlich kostengünstiger, da auf die Holzfaser- beziehungsweise Kunststoffplatten verzichtet werden kann. Darüber hinaus ist auch der Dickenauftrag des Flächentemperierungssystemes wesentlich geringer, was insbesondere bei Altbausanierungen eine große Rolle spielt. Die Dicke der Holzfaserplatte beziehungsweise der Kunststoffplatte kann vollkommen eingespart werden. Ein weiterer Vorteil ist auch die leichte Verlegung, da die Folie lediglich mit Messern zugeschnitten werden muss und Fräsen beziehungsweise Sägen der Trägerplatten komplett entfallen kann. Daher ist auch eine Anpassung an eine komplizierte Raumgeometrie problemlos möglich. Durch das Fixieren beziehungsweise Spannen der Klettfolie insbesondere an den raum- oder flächenumschließenden Bauteilen ist in einfachster Weise ein Befestigungselement für die mit Klettband 14 umwickelten Flächenheizrohre 13 beziehungsweise Flächenkühlungsrohre 13 geschaffen. Im Falle des Fußbodens übernimmt die Klettfolie 2 auch gleichzeitig die Feuchtigkeitssperre zwischen Estrich und Dämmung.

### Bezugszeichenliste

- 1: Dämmung
- 2: Klettfolie
- 3: Klebeband
- 4: Wand
- 5: Randdämmstreifen
- 6: Winkel
- 7: Knicklinie
- 8: Klammer
- 9: doppelseitiges Klebeband
- 10: Klettklebeband
- 10a: Klettbereich
- 10b: Klebebereich
- 11: Folie
- 12: Folienscharnier
- 13: Rohr
- 14: Klettband

## Patentansprüche

1. Flächentemperierungssystem umfassend eine Klettfolie (2) zum Ausrollen auf bereits verlegter Dämmung (1), Mittel zum Fixieren oder Spannen (6, 8, 9, 10) der Klettfolie (2) und Rohren (13) mit Klettmaterial (14) zum Verlegen auf der Klettfolie (2).

2. Flächentemperierungssystem nach Anspruch 1,
**dadurch gekennzeichnet, dass**
die Mittel zum Fixieren oder Spannen der Klettfolie (2) durch Tackern, Kletten oder Kleben der Klettfolie an den raumumschließenden Bauteilen (4, 5) realisiert sind.

3. Flächentemperierungssystem nach Anspruch 1 oder 2,
**dadurch gekennzeichnet, dass**
die Mittel zum Fixieren oder Spannen der Klettfolie Winkel (6) umfassen, welche mit einem Schenkel mit der Klettfolie (2) und mit dem anderen Schenkel mit den raumumschließenden Bauteilen (4, 5) verbindbar sind.

4. Flächentemperierungssystem nach Anspruch 3,
**dadurch gekennzeichnet, dass**
die Winkel (6) aus Pappe oder Kunststoff gebildet ist.

5. Flächentemperierungssystem nach Anspruch 3
**dadurch gekennzeichnet, dass**
die Winkel (6) aus Wickelmaterial mit Folienscharnier (12) in der Knickstelle gebildet sind.

6. Flächentemperierungssystem nach Anspruch 5
**dadurch gekennzeichnet, dass**
der Winkel (6) aus Wickelmaterial einen Klettbereich (10a) aufweist und mittels des Klettbereichs (10a) an der Klettfolie (2) durch Kletten festlegbar ist und einen Klebebereich (10b) aufweist und mittels des Klebebereichs (10b) an den raumumschließenden Bauteilen festlegbar ist.

7. Flächentemperierungssystem nach einem der Ansprüche 1 bis 6,
**dadurch gekennzeichnet, dass**
die Folienbahnen der Klettfolie (2) durch Klebeband (3) miteinander verbunden sind.

8. Flächentemperierungssystem nach einem der Ansprüche 1 bis 7,
**dadurch gekennzeichnet, dass**
die Klettfolie (2) aus Polypropylen besteht.

9. Flächentemperierungssystem nach einem der Ansprüche 1 bis 8,
**dadurch gekennzeichnet, dass**
die Klettfolie eine Dicke von ca. 250 µm aufweist.

10. Flächentemperierungssystem nach einem der Ansprüche 1 bis 9,
**dadurch gekennzeichnet, dass**
die raumumschließenden Bauteile Randdämmstreifen (5) sind.

11. Flächentemperierungssystem nach Anspruch 10,
**dadurch gekennzeichnet, dass**
die Randdämmstreifen (5) 8 bis 10 mm dick sind.

12. Flächentemperierungssystem nach Anspruch 10 oder 11,
**dadurch gekennzeichnet, dass**
die Randdämmstreifen (5) aus geschlossenzelligem Polyethylenschaum gebildet sind.

13. Flächentemperierungssystem nach einem der Ansprüche 1 bis 12,
**dadurch gekennzeichnet, dass**
die Rohre (13) aus Kunststoff gebildet sind.

14. Flächentemperierungssystem nach einem der Ansprüche 1 bis 13,
**dadurch gekennzeichnet, dass**
die Rohre (13) spiralförmig mit einem Klettband (14) versehen sind.

15. Klettfolie (2) zur Verwendung in einem Flächentemperierungssystem nach einem der vorherigen Ansprüche.
